# EUROPEAN PATENT SPECIFICATION

(11) **EP 3 330 340 B1**
(45) Date of publication and mention of the grant of the patent: **05.08.2020**
(21) Application number: 16832064.6
(22) Date of filing: 17.02.2016
(51) Int. Cl.: C09K 5/06

(54) **POWDER PHASE CHANGE ENERGY STORAGE MATERIAL AND PREPARATION METHOD THEREFOR**
PULVERFÖRMIGES PHASENWECHSEL-ENERGIESPEICHERMATERIAL UND VERFAHREN ZU DESSEN HERSTELLUNG
MATÉRIAU PULVÉRULENT DE STOCKAGE D'ÉNERGIE À CHANGEMENT DE PHASE ET SON PROCÉDÉ DE PRÉPARATION

(30) Priority: 31.07.2015 CN 201510464910
(43) Date of publication of application: 06.06.2018
(73) Proprietor: Pioneer Energy (Jiangsu) Co., Ltd, Zhangjiagang City, Suzhou, Jiangsu 215600 (CN)
(72) Inventor: LIU, Shuo, Suzhou Jiangsu 215600 (CN); CAO, Zhihua, Suzhou Jiangsu 215600 (CN); WANG, Hong, Suzhou Jiangsu 215600 (CN)
(74) Representative: Winter, Brandl, Fürniss, Hübner, Röss, Kaiser, Polte - Partnerschaft mbB
(86) International application number: PCT/CN2016/073905
(87) International publication number: WO 2017/020575

(56) References cited:
- CN-A- 102 134 473
- CN-A- 102 604 599
- CN-A- 103 302 932
- CN-A- 104 371 658
- CN-A- 105 062 429
- US-A- 4 637 888
- US-A1- 2009 011 171
- US-B2- 7 943 056

## Description

### FIELD

Disclosure herein generally relates to the field of energy-saving and environmentally-friendly materials. In particular, disclosure herein relates to a powdered phase-change energy-saving material and a preparation method thereof.

### BACKGROUND

As growing global energy shortage is becoming more and more serious, the storage and utilization of heat source, which is one of the major energy sources, have become a hot spot of research and development. Thermal energy can be stored in the form of sensible heat, latent heat, and chemical reaction heat.

Phase-change energy-saving materials store and release a large amount of thermal energy by phase change, achieving storage and utilization of energy and effectively solving the mismatch between energy supply and energy demand in space and in time. Such materials are widely used in intermittent and unstable thermal energy management system such as thermal energy management for aerospace high-power components, solar energy utilization, power "peak load shifting", industrial waste heat recovery and utilization, heat dissipation of electronic devices operating periodically intermittently, heating and air conditioning of energy conservation civil buildings , etc. American NASA Lewis Research Center had successfully made the first space solar heat power generating system in the world that has 2KW power output by using high-temperature phase-change materials, marking a new stage of such important space power technology.

A phase-change energy-saving material may have a large energy-saving density and can maintain a constant temperature when storing and releasing thermal energy. However, traditional inorganic phase-change energy-saving materials have problems in encapsulation and corrosion, which needs to be solved. In addition, the traditional inorganic phase-change energy-saving material has very limited application scope due to encapsulation constraints.

Document US 7 943 056 B2 discloses a composition for temperature control and heat storage consisting of sodium sulfate decahydrate, a compound of copolymers, a kind of fibres, a fusion temperature-depressing salt, a nucleating agent, and water, and a method of making it. Further, document US 2009/0011171 A1 provides thermal stabilizer compositions comprising a phase change material admixed with a support material such as a diatomaceous earth, and a nucleator. This document further encompasses a heat insulation blanket for reducing heat transfer between adjacent spaces, comprising at least two plies of thermoplastic sheet material in superposed relationship and a seal, wherein the seal connects the plies of sheet material to form a cell containing a volume of a thermal stabilizer comprising a phase change material, a support material such as a diatomaceous earth, and a nucleator. Document US 4 637 888 A discloses a reversible liquid/solid phase change composition for the storage of energy comprising a mixture of hydrated calcium bromide/calcium chloride and a modifier selected from KBr, KCl, or mixtures thereof, for modifying the semicongruent melting of the mixture to reduce the formation of crystalline CaBr2 and CaCl2 hydrate phases other than the hexahydrate phase. The composition is useful over a temperature range of from about 5 DEG to about 50 DEG C. and can be employed for the storage of coolness or heat, or as a buffer or heat sink to modulate diurnal swings in ambient temperature.

### BRIEF SUMMARY OF THE INVENTION

The objective of the present invention is to overcome the drawbacks in the prior art and to provide a powdered phase-change energy-saving material, which is conveniently encapsulated and used and which does not delaminate that leads to material failure. The objective of the present invention is also to provide a method for making the powdered phase-change energy-saving material.

The objective of the present invention can be achieved by the following technical solution: a powdered phase-change energy-saving material including a carrier and an inorganic phase-change energy-saving material adsorbed onto the carrier; the powdered phase-change energy-saving material is prepared by mixing an energy-saving material, a nucleating agent, a modifier and water with a carrier according to the following parts by weight:

| | |
|---|---|
| energy-saving material | 30-50; |
| nucleating agent | 0.1-5; |
| modifier | 0-15; |
| water | 30-50; |
| carrier | 20-25. |

The carrier is white carbon black or silica gel powder.

The white carbon black is a generic term for white powder-like X-ray amorphous silicic acid and silicate products, mainly referring to precipitated silica, aerosil and ultrafine silica gels. The white carbon black can also include powdered synthetic silicate, calcium silicate, etc. The white carbon black is a porous substance, whose composition can be represented by SiO2•nH2O, where nH2O exists in the form of surface hydroxyl groups. The white carbon black is soluble in caustic alkali and hydrofluoric acid but insoluble in water, solvents, and acids (except for hydrofluoric acid). The white carbon black is resistant to high temperatures, non-combustible, tasteless, odorless, and has excellent electrical insulation property.

The silica gel powder has an excellent adsorption property and an ideal function of separating isomers and materials having similar property and structure. During the production of raw materials, acid bubbling and aging time is strictly controlled and a high-temperature calcination technology is adopted, so that the silica gel powder has a rigid framework structure and high mechanical strength and can withstand a pressure up to 30MPa. The silica gel powder has excellent thermal stability and chemical stability, and can selectively adsorb and purify isomers from a multi-component solution.

Therefore, embodiments herein use the white carbon black or the silica gel powder as the carrier to successfully and homogeneously adsorb energy-saving material to obtain the powdered phase-change energy-saving material. The powdered phase-change energy-saving material can ensure stability and reversibility of the energy-saving material Meanwhile, the powdered phase-change energy-saving material is in a powder state at room temperature and can be stored in common plastic or metal containers without corroding the containers. Thereby, the powdered phase-change energy-saving material of the present invention can be conveniently transported and used. As such, the encapsulation problem and the phase separation problem caused by long-term repetitive phase change of the energy-saving material are solved.

The energy-saving material is an inorganic salt, which includes anhydrous calcium chloride, sodium sulfate, and sodium acetate.

The nucleating agent is selected from strontium salts and barium salts.

The modifier is ammonium chloride or sodium chloride,preferably 5-10 parts by weight.

A preparation method for the powdered phase-change energy-saving material is provided. The method includes the following steps: respectively weighing the energy-saving material, the nucleating agent, the modifier and water; mixing and blending the weighed materials homogeneously, adding the carrier, mixing and blending the mixed materials again, wherein the time interval between the two mixing and blending operations cannot exceed 10min.

Compared with the prior art, the powdered phase-change energy-saving material of the present invention uses the white carbon black or the silica gel powder as the carrier. The white carbon black or the silica gel powder has a relatively large specific surface area and adsorbs the inorganic phase-change energy-saving material through capillaries to obtain the powdered phase-change energy-saving material. Such powdered phase-change energy-saving material, as compared to the traditional phase-change energy-saving materials, can facilitate packaging and using thereof but does not cause delamination that results in ineffectiveness of the energy-saving material.

### BRIEF DESCRIPTION OF THE SEVERAL VIEWS OF THE DRAWINGS

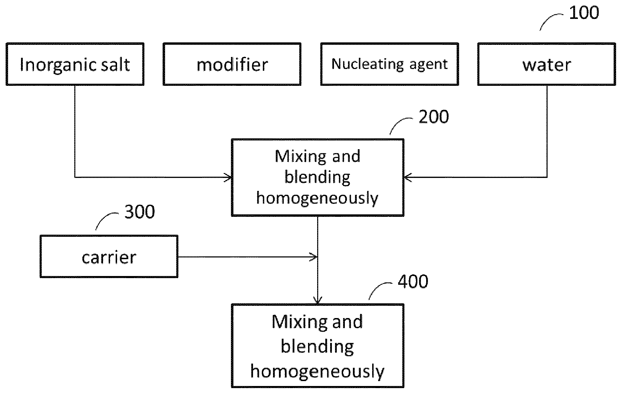

FIG.1 illustrates a method for preparing the powdered phase-change energy-saving material according to an embodiment.

### DETAILED DESCRIPTION OF THE INVENTION

The present invention is described in detail in conjunction with attached drawings and embodiments.

An embodiment for preparing the powdered phase-change energy-saving material is provided. Referring to Fig. 1, at step 100, respectively weighing ingredients including the energy-saving material, the nucleating agent, the modifier, and water. In an embodiment, the ingredients do not include the modifier. At step 200, mixing and blending the ingredients homogeneously to obtain a first mixture. At step 300, weighing the carrier. At step 400, mixing and blending the carrier with the first mixture homogenously. The time interval between the above two mixing and blending operations cannot exceed 10 minutes.

### Embodiment 1

4.8kg of anhydrous calcium chloride, 0.1kg of strontium chloride and 4.73kg of de-ionized water are respectively weighed and then mixed homogeneously; then 2kg of white carbon black is added; the materials are mixed again and encapsulated into a bag; the bag is baked in an oven at a temperature of 50°C for 1-2h; and then the powdered phase-change energy-saving material F1 is obtained.

### Embodiment 2

4.8kg of anhydrous calcium chloride, 0.1kg of strontium chloride and 4.73kg of de-ionized water are respectively weighed and then mixed homogeneously; then 2kg of silica gel powder is added; the materials are mixed again and encapsulated into a bag; the bag is baked in an oven at a temperature of 50°C for 1-2h; and then the powdered phase-change energy-saving material F2 is obtained.

### Embodiment 3

4.8kg of anhydrous calcium chloride, 0.1kg of strontium chloride, 0.2kg of ammonium chloride and 4.73kg of de-ionized water are respectively weighed and then mixed homogeneously; then 2kg of silica gel powder is added; the materials are mixed again and encapsulated into a bag; the bag is baked in an oven at a temperature of 50°C for 1-2h; and then the powdered phase-change energy-saving material F3 is obtained.

### Embodiment 4

4.8kg of anhydrous calcium chloride, 0.1kg of strontium chloride, 0.15kg of ammonium chloride and 4.73kg of de-ionized water are respectively weighed and then mixed homogeneously; then 2.5kg of white carbon black is added; the materials are mixed again and encapsulated into a bag; the bag is baked in an oven at a temperature of 50°C for 1-2h; and then the powdered phase-change energy-saving material F4 is obtained.

### Embodiment 5

3.5kg of anhydrous calcium chloride, 0.01kg of nucleating agent, namely strontium chloride, 0.15kg of modifier, namely ammonium chloride, and 4kg of water are respectively weighed and then mixed homogeneously; then 2kg of encapsulating material, namely the white carbon black, is added; the materials are mixed homogeneously again, and the powered phase-change energy-saving material F5 is obtained, wherein the interval between the two mixing operations does not exceed 10min.

### Embodiment 6

4.8kg of anhydrous calcium chloride, 0.1kg of strontium chloride, 0.15kg of potassium chloride, and 4.73kg of water, and then mixed homogeneously; then 2.5kg of the carrier, namely silica gel powder, is added; the materials are mixed homogeneously again, and the powered phase-change energy-saving material F6 is obtained, wherein the interval between the two mixing operations does not exceed 10min.

The properties of the phase-change materials obtained in the above embodiments are respectively as follows:

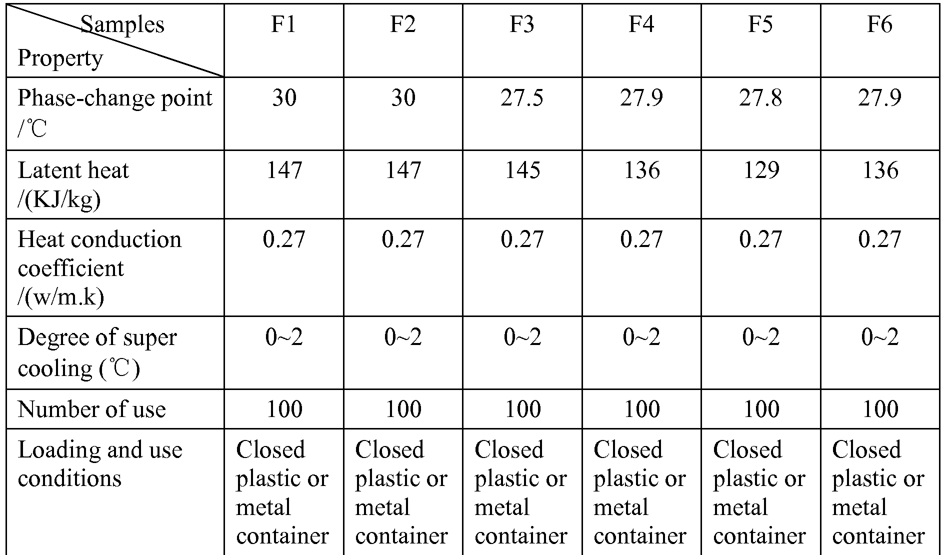

From the above table it can be seen that, by selecting proper encapsulating materials and ratios thereof, the powdered phase-change energy-saving material of the present invention successfully homogeneously adsorbs the inorganic material to the system, ensuring stability and reversibility of the inorganic material; meanwhile, the powdered phase-change energy-saving material of the present invention is in the powder state at room temperature and can be contained in common plastic or metal containers without corroding the containers. The energy-saving material of the present invention is conveniently transported and used, and solves the encapsulation problem and the problem of phase separation caused by long-term cycling of phase changes.

The above embodiments only describe some of the embodiments of the present invention, but cannot be accordingly regarded as any limitation to the patented scope of the present invention. It should be noted that, for those ordinarily skilled in the art, various modifications and improvements can be made on the basis of the concept of the present invention, which all fall within the protection scope of the present invention. Therefore, the protection scope of the present invention should be subject to the claims.

## Claims

1. A powdered phase-change energy-saving material, comprising a carrier and an inorganic phase-change energy-saving material adsorbed onto the carrier,
wherein the powdered phase-change energy-saving material include an energy-saving material, a nucleating agent, a modifier and water with the following weight parts:
| | |
|---|---|
| energy-saving material | 35-50; |
| nucleating agent | 0.1-5; |
| modifier | 0-15; |
| water | 35-50; |
| carrier | 20-25, |
**characterized in that** the carrier is white carbon black or silica gel powder.

2. The powdered phase-change energy-saving material according to claim 1, wherein the energy-saving material is an inorganic salt, and the inorganic salt include one or more salts selected from calcium chloride, sodium sulfate, sodium acetate and hydrates thereof.

3. The powdered phase-change energy-saving material according to claim 1, wherein the nucleating agent is selected from strontium salts and barium salts,.

4. The powdered phase-change energy-saving material according to claim 1, wherein the modifier include one or more compounds selected from ammonium chloride, sodium chloride, and potassium chloride, a dose of the modifier is 5-10 parts by weight.

5. A preparation method for the powdered phase-change energy-saving material according to claim 1, wherein the method comprises: respectively weighing the energy-saving material, the nucleating agent, the modifier, and water;
mixing and blending the weighed materials homogeneously to obtain a first mixture;
adding the carrier into the first mixture; and
mixing and blending the carrier and the first mixture to obtain a second mixture, wherein the time interval between the two mixing and blending steps does not exceed 10min.

## Patentansprüche

1. Pulverförmiges phasenänderndes energiesparendes Material, das einen Träger und ein auf dem Träger adsorbiertes anorganisches phasenänderndes energiesparendes Material umfasst,
wobei das pulverförmige phasenändernde energiesparende Material ein energiesparendes Material, ein Nukleierungsmittel, ein Modifizierungsmittel und Wasser mit den folgenden Gewichtsteilen enthält:
| | |
|---|---|
| energiesparendes Material | 35-50; |
| Nukleierungsmittel | 0.1-5; |
| Modifizierungsmittel | 0-15; |
| Wasser | 35-50; |
| Träger | 20-25, |
**dadurch gekennzeichnet, dass** der Träger weißer Ruß oder Silikagelpulver ist.

2. Pulverförmiges phasenänderndes energiesparendes Material nach Anspruch 1, wobei das energiesparende Material ein anorganisches Salz ist und das anorganische Salz ein oder mehrere Salze, ausgewählt aus Calciumchlorid, Natriumsulfat, Natriumacetat und Hydraten davon, enthält.

3. Pulverförmiges phasenänderndes energiesparendes Material nach Anspruch 1, wobei das Nukleierungsmittel aus Strontiumsalzen und Bariumsalzen ausgewählt ist.

4. Pulverförmiges phasenänderndes energiesparendes Material nach Anspruch 1, wobei das Modifizierungsmittel eine oder mehrere Verbindungen, ausgewählt aus Ammoniumchlorid, Natriumchlorid und Kaliumchlorid, enthält, wobei eine Dosis des Modifizierungsmittels 5-10 Gewichtsteile beträgt.

5. Herstellungsverfahren für das pulverförmige phasenändernde energiesparende Material nach Anspruch 1, wobei das Verfahren umfasst:
jeweiliges Wiegen des energiesparenden Materials, des Nukleierungsmittels, des Modifizierungsmittels und des Wassers;
homogenes Mischen und Vermengen der gewogenen Materialien, um eine erste Mischung zu erhalten;
Hinzufügen des Trägers zu der ersten Mischung; und
Mischen und Vermengen des Trägers und der ersten Mischung, um eine zweite Mischung zu erhalten, wobei das Zeitintervall zwischen den beiden Misch- und Vermengungsschritten 10 Minuten nicht überschreitet.

## Revendications

1. Matériau pulvérulent économe en énergie à changement de phase, comprenant un support et un matériau inorganique économe en énergie à changement de phase adsorbé sur le support,
dans lequel le matériau pulvérulent économe en énergie à changement de phase inclut un matériau économe en énergie, un agent de nucléation, un modificateur et de l'eau avec les parties en poids suivantes :
matériau économe en énergie 35 à 50 ;
agent de nucléation 0,1 à 5 ;
modificateur 0 à 15 ;
eau 35 à 50 ;
support 20 à 25,
**caractérisé en ce que** le support est du noir de carbone blanc ou de la poudre de gel de silice.

2. Matériau pulvérulent économe en énergie à changement de phase selon la revendication 1, dans lequel le matériau économe en énergie est un sel inorganique, et le sel inorganique inclut un ou plusieurs sels sélectionnés parmi le chlorure de calcium, le sulfate de sodium, l'acétate de sodium et des hydrates de ceux-ci.

3. Matériau pulvérulent économe en énergie à changement de phase selon la revendication 1, dans lequel l'agent de nucléation est sélectionné parmi les sels de strontium et les sels de baryum.

4. Matériau pulvérulent économe en énergie à changement de phase selon la revendication 1, dans lequel le modificateur inclut un ou plusieurs composés sélectionnés parmi le chlorure d'ammonium, le chlorure de sodium et le chlorure de potassium, une dose du modificateur est de 5 à 10 parties en poids.

5. Méthode de préparation du matériau pulvérulent économe en énergie à changement de phase selon la revendication 1, dans laquelle la méthode comprend : respectivement la pesée du matériau économe en énergie, de l'agent de nucléation, du modificateur, et de l'eau ;
le mixage et le mélange de manière homogène des matériaux pesés pour obtenir un premier mélange ;
l'ajout du support dans le premier mélange ; et
le mixage et le mélange du support et du premier mélange pour obtenir un second mélange, dans laquelle l'intervalle de temps entre les deux étapes de mixage et de mélange n'excède pas 10 minutes.
